# EUROPEAN PATENT APPLICATION

(11) **EP 1 585 348 A1**
(43) Date of publication of application: **12.10.2005**
(21) Application number: 05252018.6
(22) Date of filing: 31.03.2005
(51) Int. Cl.: H04N 17/00, G06T 9/00

(54) **Video quality measurement**

(30) Priority: 01.04.2004 GB 0407428
(71) Applicant: The Robert Gordon University, Aberdeen, AB10 1FR (GB)
(72) Inventor: Richardson, Iain E. G., Westerton Rothienorman AB51 8US (GB); Kannangara, Chaminda Sampath, Aberdeen AB24 5QX (GB)
(74) Representative: Jones, Keith William

(57) **Abstract**

A video quality measurement system and method is disclosed comprising means for providing one or more video streams, wherein variance in the one or more video streams is related to one or more processing variables; a video stream playback means, wherein an output video stream is played; and a processing variable variance means, wherein the output video stream is varied according to a control input, wherein the video stream playback means maintains the position in time of playback in the output video stream regardless of the processing variable variance means. The method can also be implemented in a computer program product.

## Description

The present invention relates to video quality measurement and in particular, but not exclusively, to subjective video quality measurement.

Video quality measurement is an important requirement for designers and implementers of video communication systems. Quality measurement is especially important for compressed video, since most video compression algorithms are "lossy" and degrade video quality. That is, compression is achieved at the expense of video quality.

Applications of video quality measurement include: comparing the performance of alternative video compression algorithms; quantifying the bit-rate versus distortion ("rate-distortion") behaviour of a video compression algorithm; and determining levels of acceptable video quality for a particular purpose -for example, broadcast video, videoconferencing or streamed video.

Video quality measurement methods can be categorised as objective: based on automatic measurement of parameters of the video sequence, or subjective: based on evaluation by one or more human observers.

Subjective measurements can provide a realistic guide to the video quality perceived by a user. However, obtaining an accurate outcome from subjective tests typically involves many repetitions of a time-consuming test with a large number of test subjects, making the process expensive and difficult to carry out.

Objective measurements are, in general, straightforward to carry out and are readily repeatable. However, objective measurement techniques developed to date do not correlate well with the results of subjective tests with "real" observers as reported in Zhong, Y., Richardson, I., Sahraie, A. and McGeorge, P., (2003) "Qualitative and quantitative assessment in video compression", 12^{th} European Conference on Eye Movements. Subjective tests therefore remain essential for the characterisation of visual quality.

Conventional subjective quality measurement methods typically involve presenting a test subject with one or more video clips. The subject is asked to make a decision about the subjective quality of the test clip or clips, for example, by recording the perceived degradation of the clip compared with a reference video clip.

A typical test requirement is to determine the optimum choice from a set of alternatives. Examples include choosing versions of the same clip encoded with different CODECs; selecting the optimum strength of a post-processing filter; and choosing the preferred trade-off between frame-rate and image quality for a given bit-rate, from a given set of frame-rate/image quality options.

Each of these alternatives must be viewed and graded separately by the test subjects. This means that the time taken to carry out a complete test increases with the number of alternatives to be tested. In some cases - for example, choosing a preferred trade-off between frame-rate and image quality - there are a large number of possible outcomes and the test designer is faced with the choice between: (a) running a very large number of tests in order to obtain a fine-grained result; or (b) limiting the number of tests at the expense of discretising the result.

According to a first aspect of the present invention there is provided a video quality measurement system comprising:
means for providing one or more video streams, wherein variance in the one or more video streams is related to one or more processing variables;
a video stream playback means, wherein an output video stream is played; and
a processing variable variance means, wherein the output video stream is varied according to a control input,
wherein the video stream playback means maintains the position in time of playback in the output video stream regardless of the processing variable variance means.

Preferably, the processing variable variance means selects from two or more video streams according to the control input.

Alternatively, the processing variable variance means processes a video stream in real time according to the control input.

Preferably, the processing variables are one or more of the following:
CODEC used for encoding and decoding each of the plurality of video streams;
pre-processing or post-processing filter strength of the plurality of video streams;
frame-rate of each of the plurality of video streams;
image quality or quantization parameter of each of the plurality of video streams;
computational complexity of a processing algorithm applied to each of the plurality of video streams;
transport protocol, transmission channel and/or transmission channel model used to transmit each of the plurality of video streams;
channel coding process applied to each of the plurality of video streams; and
digital watermarking applied to each of the plurality of video streams.

Preferably, the processing variables are both frame-rate and image quality of a video stream encoded at a particular bit-rate.

Preferably, the processing variable variance means outputs a result of the video quality measurement system after a preferred one or more processing variables are selected.

Preferably, a human test subject controls the processing variable variance means.

For example, the human test subject may control the processing variable variance means with an input device such as a potentiometer or by means of a software control such as an on-screen slider bar.

According to a second aspect of the present invention there is provided a method of measuring video quality comprising the steps of:
(i) processing one or more video streams, wherein variance in the one or more video streams is related to one or more processing variables;
(ii) playing an output video stream; and
(iii) varying the one or more processing variables, wherein the output video stream is varied according to the variance of the one or more processing variables,
(iv) wherein the position in time of the output video stream is maintained whilst playing regardless of the processing variable variance means.

Preferably, step (iii) comprises selecting from two or more video streams according to the one or more processing variables.

Alternatively, step (iii) comprises processing a video stream in real time according to the one or more processing variables.

Preferably, the processing variables are one or more of the following:
CODEC used for encoding and decoding each of the plurality of video streams;
pre-processing or post-processing filter strength of the plurality of video streams;
frame-rate of each of the plurality of video streams; and
image quality or quantization parameter of each of the plurality of video streams;
computational complexity of a processing algorithm applied to each of the plurality of video streams;
transport protocol, transmission channel and/or transmission channel model used to transmit each of the plurality of video streams;
channel coding process applied to each of the plurality of video streams;
digital watermarking applied to each of the plurality of video streams.

Preferably, the processing variables are both frame-rate and image quality of a video stream encoded at a particular bit-rate.

Preferably, the method of measuring video quality further comprises the step of outputting a result after a preferred one or more processing variables are selected.

Preferably, a human test subject controls varying the one or more processing variables.

According to a third aspect of the present invention, there is provided a computer program product directly loadable into the internal memory of a digital computer comprising software code portions for performing the steps of the second aspect of the invention when said product is run on a computer.

Embodiments of the present invention will now be described with reference to the accompanying drawings, in which:
Fig. 1 shows a flow diagram of a video quality measurement system according to the present invention; and
Fig. 2 shows a flow diagram of an alternative embodiment of a video quality measurement system according to the present invention.

A video quality measurement system 10 has an original video stream 12 that is processed by a processor 14 to produce a processed video stream for output to a display 16. The processor 14 can perform a number of different operations. For example, the processor 14 may encode the original video stream 12 according to a particular CODEC standard.

The processor 14 enables the video stream 12 to be processed in real time before output to the display 16. A control 18 allows the alteration of a set of processing variables 20. The processor 14 modifies the processed video stream to the display 16 according to the set of processing variables 20. The control 18 also allows the video quality measurement system 10 to record the chosen set of processing variables to an output 22.

For example, the control 18 may modify processing variables related to encoding such as frame rate and quantization parameter according to a specified bit-rate. A higher frame rate provides a video stream which when viewed has smooth transitions and a generally less "jerky" motion. A higher quantization parameter reduces the quality of the image as a larger range of values are included in a particular quantization step. The set of processing variables 20 are altered such that if the frame rate is increased the quantization parameter is increased and if the frame rate is decreased the quantization parameter is decreased. Therefore, the processor 14 outputs a processed video stream to the display 16 which uses the bit-rate specified either by having an increased frame rate at the expense of image quality or increased image quality at the expense of frame rate.

The control 18 may subsequently select a set of processing variables according to a chosen processed video stream for recording to the output 22.

The control 18 may be operated by an objective system. For example, the control 18 may analyse the decoded video stream from the display 16 and provide a feedback system to the processor 14 through the set of processing variables 20. The control 18 would then halt the system 10 when a steady state situation had been reached.

In contrast, a human test subject may operate the control 18 and therefore provide a subjective video quality measurement system. When the human test subject has selected, according to their subjective judgement, the "optimum" decoded video stream, the preferred set of processing variables are recorded.

Furthermore, the control 18 may record the variation in the set of processing variables 20 throughout the course of a human test subject's operation of the video quality measurement system 10. This allows an insight into the test subject's response to the video clip. For example, an oscillating set of processing variables with respect to time may indicate uncertainty on the part of the test subject.

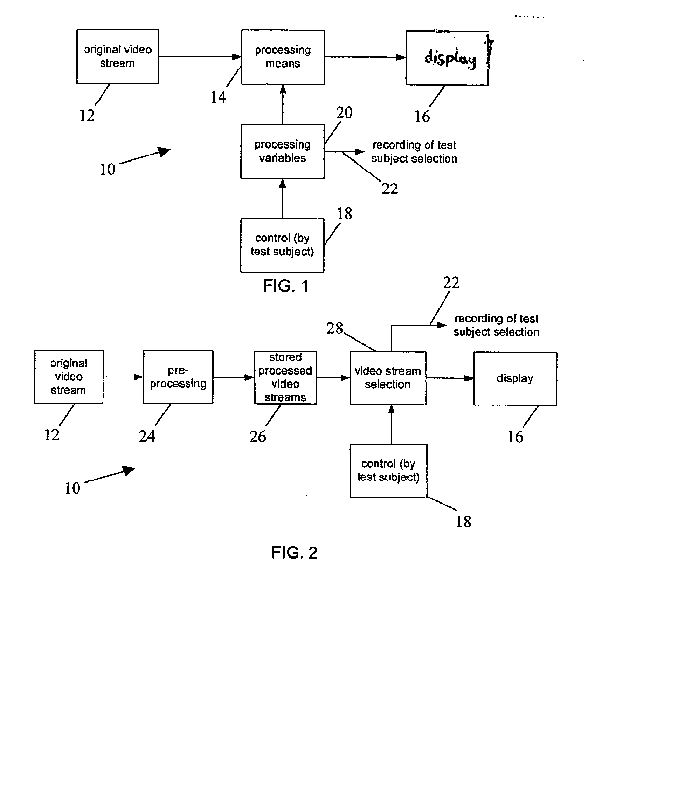

Referring now to Fig.2, an alternative embodiment of a video quality measurement system is shown in which like numerals are used to label systems shown in Fig. 1.

The video quality measurement system 10 in this embodiment has a pre-processor 24 which generates a plurality of processed video streams from the original video stream 12. Each processed video stream varying from the other processed video streams by a range of predetermined processing variables. The plurality of video streams are stored in a video stream store 26. One of the processed video streams is outputted to the display 16. The control 18 is then enabled to modify a video stream selector 28. The video stream selector 28 selects, from the plurality of processed video streams in the video stream store 26, an alternative processed video stream to output to the display 16. The alternative processed video stream is selected according to the processing variables used by the pre-processor 24 and the control 18. The video stream selector 28 ensures that the position of playback is maintained even though the processed video stream has been changed. This provides display continuity and enables direct comparison from one processed video stream to another. Once a "preferred" processed video stream has been selected the control 18 records the selection at the output 22.

Modifications and improvements may be incorporated without departing from the scope of the invention.

## Claims

1. A video quality measurement system comprising:
means for providing one or more video streams, wherein variance in the one or more video streams is related to one or more processing variables;
a video stream playback means, wherein an output video stream is played; and
a processing variable variance means,
wherein the output video stream is varied according to a control input, wherein the video stream playback means maintains the position in time of playback in the output video stream regardless of the processing variable variance means.

2. A system as claimed in claim 1, wherein the processing variable variance means selects from two or more video streams according to the control input.

3. A system as claimed in claim 1, wherein the processing variable variance means processes a video stream in real time according to the control input.

4. A system as claimed in any of claims 1 to 3, wherein the processing variables are one or more of the following: CODEC used for encoding and decoding each of the plurality of video streams; pre-processing or post-processing filter strength of the plurality of video streams; frame-rate of each of the plurality of video streams; and image quality or quantization parameter of each of the plurality of video streams; computational complexity of a processing algorithm applied to each of the plurality of video streams; transport protocol, transmission channel and/or transmission channel model used to transmit each of the plurality of video streams; channel coding process applied to each of the plurality of video streams; digital watermarking applied to each of the plurality of video streams.

5. A system as claimed in claim 4, wherein the processing variables are both frame-rate and image quality of a video stream encoded at a particular bit-rate.

6. A system as claimed in an of claims 1 to 5, wherein the processing variable variance means outputs a result of the video quality measurement system after one or more processing variables are selected.

7. A system as claimed in an of claims 1 to 6, wherein a human test subject controls the processing variable variance means.

8. A method of measuring video quality comprising the steps of:
(i) processing one or more video streams, wherein variance in the one or more video streams is related to one or more processing variables;
(ii) playing an output video stream; and
(iii) varying the one or more processing variables,
wherein the output video stream is varied according to the variance of the one or more processing variables, wherein the position in time of the output video stream is maintained whilst playing regardless of the processing variable variance means.

9. A method as claimed in claim 8, wherein step (iii) comprises selecting from two or more video streams according to the one or more processing variables.

10. A method as claimed in claim 8, wherein step (iii) comprises processing a video stream in real time according to the one or more processing variables.

11. A method as claimed in any of claims 8 to 10, wherein the processing variables are one or more of the following: CODEC used for encoding and decoding each of the plurality of video streams; pre-processing or post-processing filter strength of the plurality of video streams; frame-rate of each of the plurality of video streams; and image quality or quantization parameter of each of the plurality of video streams; computational complexity of a processing algorithm applied to each of the plurality of video streams; transport protocol, transmission channel and/or transmission channel model used to transmit each of the plurality of video streams; channel coding process applied to each of the plurality of video streams; digital watermarking applied to each of the plurality of video streams.

12. A method as claimed in claim 11, wherein the processing variables are both frame-rate and image quality of a video stream encoded at a particular bit-rate.

13. A method as claimed in any of claims 8 to 12, wherein the method of measuring video quality further comprises the step of outputting a result after a preferred one or more processing variables are selected.

14. A method as claimed in any of claims 8 to 13, wherein a human test subject controls varying the one or more processing variables.

15. A computer program product directly loadable into the internal memory of a digital computer comprising software code portions for performing the method as claimed in any of claims 8 to 14 when said product is run on a computer.
